(19) Europäisches Patentamt
European Patent Office
Office européen des brevets

(11) Veröffentlichungsnummer : **0 093 926**
**B1**

(12) **EUROPÄISCHE PATENTSCHRIFT**

(45) Veröffentlichungstag der Patentschrift : **07.08.85**

(51) Int. Cl.[4] : **C 09 B 29/039**, C 09 B 29/09// D06P1/18

(21) Anmeldenummer : **83103986.2**

(22) Anmeldetag : **23.04.83**

(54) **Azofarbstoffe.**

(30) Priorität : **06.05.82 DE 3217021**
**05.04.83 DE 3312285**

(43) Veröffentlichungstag der Anmeldung : **16.11.83 Patentblatt 83/46**

(45) Bekanntmachung des Hinweises auf die Patenterteilung : **07.08.85 Patentblatt 85/32**

(84) Benannte Vertragsstaaten : **CH DE FR GB LI**

(56) Entgegenhaltungen :
**FR-A- 1 551 802**
**FR-A- 2 067 092**
**FR-A- 2 135 199**
**FR-A- 2 137 881**
**LU-A- 54 323**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hamprecht, Rainer, Dr.**
**Im Kerberich 25**
**D-5068 Odenthal (DE)**
Erfinder : **Leverenz, Klaus**
**Heymannstrasse 44**
**D-5090 Leverkusen 1 (DE)**
Erfinder : **Schündehütte, Karl Heinz, Prof. Dr.**
**Kilef 75**
**D-5090 Leverkusen 3 (DE)**
Erfinder : **Brandt, Horst, Dr.**
**Antoniusstrasse 4**
**D-5068 Odenthal (DE)**

**EP 0 093 926 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Dispersionsazofarbstoffe der Formel (I)

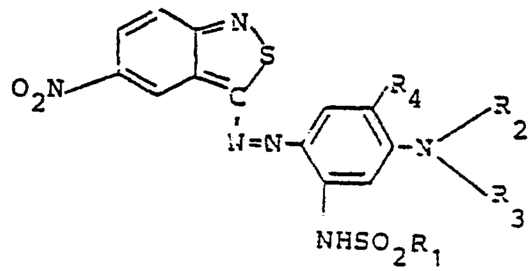

worin

$R_1$ $C_1$-$C_4$-Alkyl oder $C_1$-$C_4$-Chloralkyl,

$R_2$ $C_1$-$C_4$-Alkyl, $C_3$-$C_5$-Alkenyl, $C_1$-$C_4$-Alkyl-O-$C_2$-$C_4$-alkyl oder $C_1$-$C_2$-Alkyl-O-$C_2$-$C_4$-alkyl-O-$C_2$-$C_4$-alkyl,

$R_3$ $C_1$-$C_4$-Alkyl, $C_3$-$C_5$-Alkenyl, $C_1$-$C_2$-Alkyl-O-$C_2$-$C_4$-alkyl oder $C_1$-$C_2$-Alkyl-O-$C_2$-$C_4$-alkyl-O-$C_2$-$C_4$-alkyl und

$R_4$ -O-$C_1$-$C_2$-Alkyl oder vorzugsweise Wasserstoff bedeuten.

Man erhält die neuen Farbstoffe durch übliche Diazotierungs- und Kupplungsreaktionen.

Sowohl Diazo- als auch Kupplungskomponenten sind größtenteils bekannt und beispielsweise in folgender Patentliteratur beschrieben :

DE-AS 15 44 375 (GB 11 12 146)
DE-OS 16 44 169
DE-OS 28 49 471 (GB 20 37 796)
DE-OS 22 22 639
DE-OS 28 37 960 (US 42 92 239)
DE-OS 22 21 364
DE-OS 20 54 685
DE-OS 27 11 130 (GB 15 59 562)
GB-PS 12 02 984
EP-OS 00 27 887

Die neuen Farbstoffe zeichnen sich bei guten Allgemeinechtheiten durch hohe Farbstärke, klare Nuance und gutes Aufbauvermögen aus.

Sie eignen sich daher hervorragend zum Färben von Synthesefasern, insbesondere Celluloseester-, Superpolyamid- und vor allem Polyesterfasern, auf denen sie klare violette bis blaue Färbungen ergeben.

Ein weiterer Gegenstand der Erfindung ist ein röntgenographisch definierter Mischkristall aus den beiden Azofarbstoffen der Formeln

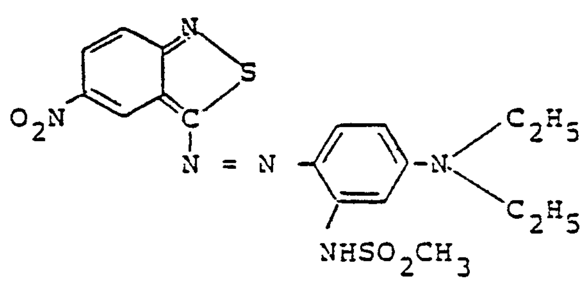

(A)

und

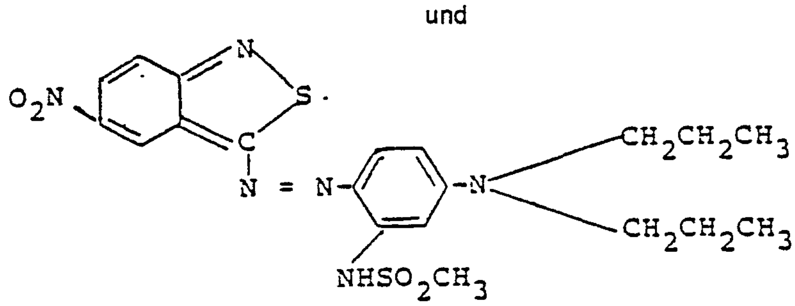

(B)

Diese neue kristallographische Form ist gekennzeichnet durch die Netzebenenabstände d/Å 16.20, 7.87, 6.05 und 3.41 mit den relativen Intensitäten 100, 35, 70 und 80.

Die angegebenen Netzebenenabstände werden aus den vier stärksten Linien in dem als Fig. 1 beigefügten Debye-Scherrer-Diagramms (Wellenlänge 1.54 Å d. Cu-K -strahlung) errechnet. Das Mischungsverhältnis der beiden Farbstoffe beträgt etwa 60 : 40 bis 40 : 60, vorzugsweise etwa 50 : 50.

Die Farbstoffe der Formeln A und B sind nicht bekannt. Man erhält diese Farbstoffe jedoch in üblicher Weise (vgl. z. B. EP-A 51 818) durch Diazotieren und Kuppeln, wobei im allgemeinen der Farbstoff der Formel A in einer kristallinen Form anfällt, die durch die Netzebenenabstände d/Å 13.81, 6.76, 4.77, 4.69 und 3.53 mit den Intensitäten 100, 25, 25, 25 und 90 (vgl. Fig. 2) gekennzeichnet ist.

Der Farbstoff der Formel B ist durch die Netzebenenabstände d/Å 14.73, 10.31, 7.34, 4.91 und 3.70 mit den relativen Intensitäten 40, 100, 25, 30 und 100 charakterisiert (vgl. Fig. 3).

Beide Einzelfarbstoffe zeigen jedoch keine ausreichende Färbebadstabilität — im Gegensatz zu dem Mischkristall aus A und B.

Man erhält diese Kristallform beispielsweise dadurch, daß man eine mechanische Abmischung der beiden Farbstoffe (A) und (B) aus n-Hexanol umkristallisiert. Eine andere Herstellungsvariante besteht darin, daß man die bei der sog. Mischkupplung entstehende wäßrige Farbstoffdispersion — ggf. nach Zugabe eines Dispergiermittels — einer 4- bis 6-stündigen Temperierung bei 70-90 °C unterwirft. Werden die dabei erhaltenen Mischkristalle mit den üblichen Dispergiermitteln, wie Ligninsulfonsäuren oder Kondensationsprodukten aus Naphtalin, Formaldehyd und Schwefelsäure formiert, so erhält man auf Polyesterfasern unter üblichen Färberbedingungen tiefe einwandfreie Färbungen.

## Beispiel 1

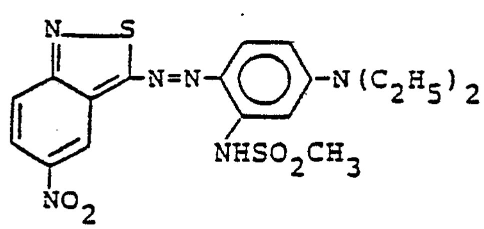

8,5 g 3-Amino-5-nitro-2, 1-benzisothiazol werden in ca. 70 ml 85 proz. Phosphorsäure durch Erwärmen gelöst und bei − 10 °C durch langsames Eintragen von 3 g feingepulvertem Natriumnitrit diazotiert. Man rührt 2 Stunden bei − 5 °C bis − 10 °C und zerstört den Überschuß Nitrit mit etwas Amidosulfonsäure. Diese Diazolösung läßt man nun langsam zu einer auf 0 °C abgekühlten Lösung von 10,5 g 3-Diethylamino-methansulfonanilid in 180 ml Eisessig zulaufen, wobei man durch Eintragen von Eis dafür sorgt, daß die Temperatur nicht über 2 °C steigt. Man läßt zwei Stunden bei 2-5 °C nachrühren und hebt dann durch Zutropfen einer 20-proz. Natriumacetatlösung den pH-Wert auf 3 an. Nach Rühren über Nacht bei Raumtemperatur wird abgesaugt und mit Wasser salz- und säurefrei gewaschen. Der Farbstoff färbt Polyesterfasern in klaren Blautönen mit guten Echtheitseigenschaften.

$\lambda_{max}$ (in DMF) 623 nm ; Schmp. : 203 °C

Colour Index Hue Indication Chart Nr. 14

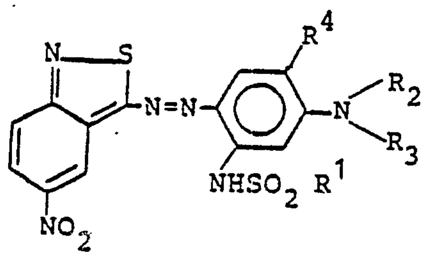

(Voir tableau page 4)

| Bsp.-Nr. | $R_1$ | $R_2$ | $R_3$ | $R_4$ | λ | Colour Index Hue indication chart |
|---|---|---|---|---|---|---|
| 2 | $CH_3$ | $n-C_3H_7$ | $n-C_3H_7$ | H | 626 | 14 (Schmp. 198°) |
| 3 | $CH_3$ | $n-C_4H_9$ | $n-C_4H_9$ | H | 627 | 14 |
| 4 | $CH_3$ | $C_2H_4OCH_3$ | $C_2H_4OCH_3$ | H | 617 | 14 |
| 5 | $CH_3$ | $C_2H_5$ | $C_2H_4OCH_3$ | H | 620 | 14 |
| 6 | $CH_3$ | $C_2H_4OC_2H_5$ | $C_2H_4OC_2H_5$ | H | 617 | 14 |
| 7 | $C_4H_9$ | $C_2H_5$ | $C_2H_5$ | H | 623 | 14 |
| 8 | $C_4H_8Cl$ | $C_2H_5$ | $C_2H_5$ | H | 623 | 14 |
| 9 | $C_4H_8Cl$ | $C_2H_4OCH_3$ | $C_2H_4OCH_3$ | H | 617 | 14 |
| 10 | $CH_2Cl$ | $C_2H_5$ | $C_2H_5$ | H | 622 | 14 |
| 11 | $CH_2Cl$ | $C_2H_5$ | $C_2H_4OCH_3$ | H | 620 | 14 |
| 12 | $CH_3$ | $C_2H_5$ | $C_2H_5$ | $OCH_3$ | 683 | 40 |
| 13 | $CH_3$ | $C_4H_9$ | $C_4H_9$ | $OCH_3$ | 685 | 40 |
| 14 | $CH_3$ | $C_2H_4OCH_3$ | $C_2H_4OCH_3$ | $OCH_3$ | 673 | 40 |
| 15 | $CH_3$ | $(C_2H_4O)_2CH_3$ | $C_2H_5$ | H | | 14 |
| 16 | $CH_3$ | $(C_2H_4O)_2C_2H_5$ | $C_2H_5$ | H | | 14 |
| 17 | $CH_3$ | $C_2H_5$ | $C_2H_5$ | H | | 15 |
| 18 | $CH_3$ | $(C_2H_4O)_2CH_3$ | $C_2H_5$ | H | | 15 |
| 19 | $CH_3$ | $C_2H_5$ | $C_2H_5$ | H | | 15 |
| 20 | $CH_3$ | $C_2H_4OCH_3$ | $C_2H_5$ | H | | 15 |
| 21 | $CH_3$ | $C_2H_5$ | $C_2H_5$ | $OCH_3$ | | 41 |
| 22 | $CH_3$ | $C_2H_5$ | $C_2H_5$ | H | | 15 |
| 23 | $CH_3$ | $C_2H_4OCH_3$ | $C_2H_5$ | H | | 15 |
| 24 | $CH_3$ | $CH_2-CH=CH_2$ | $CH_1-CH=CH_2$ | H | | 14 |

Beispiel 25

50 g einer 1 : 1-Mischung der Farbstoffe der Formeln A und B werden in 2 000 g n-Hexanol bei 120 °C gelöst. Der beim Abkühlen auskristallisierende Farbstoff mit dem in Fig. 1 gezeigten Röntgenspektrum und dem Schmelzpunkt 165 °C wird abgesaugt und bei 70 °C getrocknet.

Der getrocknete Rohfarbstoff wird mit 270 $cm^2$ Wasser, 90 g eines Ligninsulfonates, 2 % eines nichtionogenen Tensids und 0,5 % eines Entschäumers (bezogen auf die Farbstoffmenge) gemischt und in einer Perlmühle auf eine Teilchengröße 2 µm gemahlen.

Das dabei erhaltene Farbstoffpräparat zeigt eine ausgezeichnete Färbebadstabilität. Ein Präparat mit ähnlichen Eigenschaften erhält man wenn eine entsprechende etwa 20 %ige wäßrige Farbstoffispension, wie sie unmittelbar bei der sog. Mischkupplung anfällt, 4 Stunden auf 80-90 °C erhitzt, den Farbstoff absaugt und den nassen Preßkuchen mit 180 % Ligninsulfat (bezogen auf den Farbstoffanteil) zu einem feinen Teig vermahlt und diesen nach Zusatz von Verschnittmitteln sprühtrocknet.

**Patentansprüche**

1. Azofarbstoffe der Formel (II)

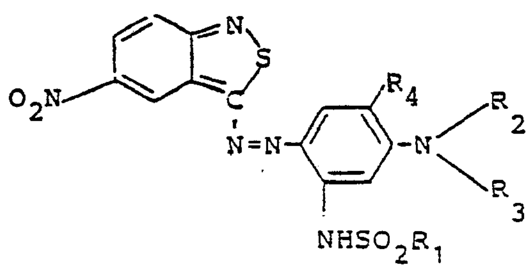

worin

$R_1$ gegebenenfalls durch Chlor substituiertes $C_1$-$C_4$-Alkyl,

$R_2$ $C_1$-$C_4$-Alkyl, $C_3$-$C_5$-Alkenyl, $C_1$-$C_4$-Alkyl-O-$C_2$-$C_4$-alkyl oder $C_1$-$C_2$-Alkyl-O-$C_2$-$C_4$-alkyl-O-$C_2$-$C_4$-Alkyl,

$R_3$ $C_1$-$C_4$-Alkyl, $C_3$-$C_5$-Alkenyl, $C_1$-$C_2$-Alkyl-O-$C_2$-$C_4$-alkyl oder $C_1$-$C_2$-Alkyl-O-$C_2$-$C_4$-alkyl-O-$C_2$-$C_4$-alkyl und

$R_4$ -O-$C_1$-$C_2$-Alkyl oder Wasserstoff bedeuten.

2. Verfahren zum Färben und Bedrucken organischer Materialien, insbesondere Fasermaterialien, dadurch gekennzeichnet, daß man Farbstoffe gemäß Anspruch 1 einsetzt.

3. Mischung von Azofarbstoffen der Formeln

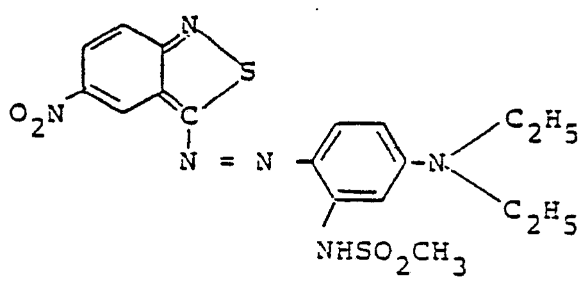

(A)

und

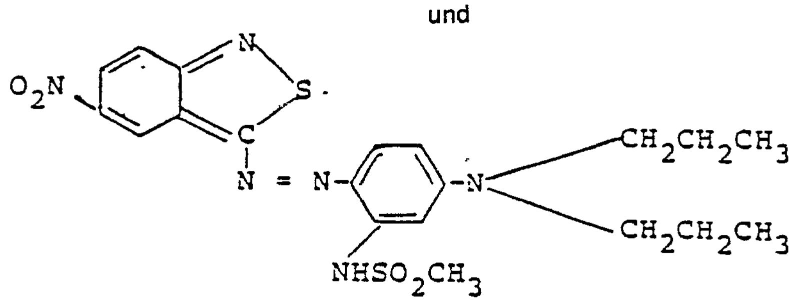

(B)

dadurch gekennzeichnet, daß deren Netzebenenabstände d/Å 16.20, 7,87, 6.05 und 3.41 mit den relativen Intensitäten 100, 35, 70 und 80, betragen.

4. Mischung von Azofarbstoffen gemäß Anspruch 3, dadurch gekennzeichnet, daß das Mischungsverhältnis 40 : 60 bis 60 : 40, vorzugsweise 50 : 50, beträgt.

5. Verfahren zum Färben von Polyesterfasern, dadurch gekennzeichnet, daß man die Farbstoffmodifikation gemäß Anspruch 3 verwendet.

## Claims

1. Azo dyestuffs of the formula (II)

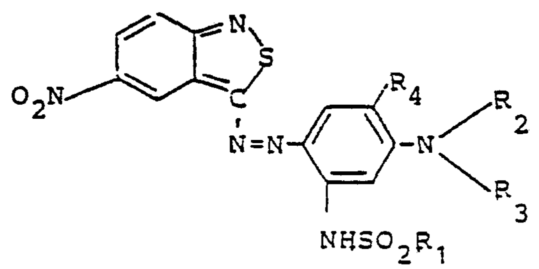

wherein

$R_1$ denotes optionally chlorine-substituted $C_1$-$C_4$-alkyl,

$R_2$ denotes $C_1$-$C_4$-alkyl, $C_3$-$C_5$-alkenyl, $C_1$-$C_4$-alkyl-O-$C_2$-$C_4$-alkyl or $C_1$-$C_2$-alkyl-O-$C_2$-$C_4$-alkyl-O-$C_2$-$C_4$-alkyl,

$R_3$ denotes $C_1$-$C_4$-alkyl, $C_3$-$C_5$-alkenyl, $C_1$-$C_2$-alkyl-O-$C_2$-$C_4$-alkyl or $C_1$-$C_2$-alkyl-O-$C_2$-$C_4$-alkyl-O-$C_2$-$C_4$-alkyl and

$R_4$ denotes -O-$C_1$-$C_2$-alkyl or hydrogen.

2. Process for dyeing and printing organic materials, in particular fibre materials, characterised in that dyestuffs according to Claim 1 are used.

3. Mixture of azo dyestuffs of the formulae

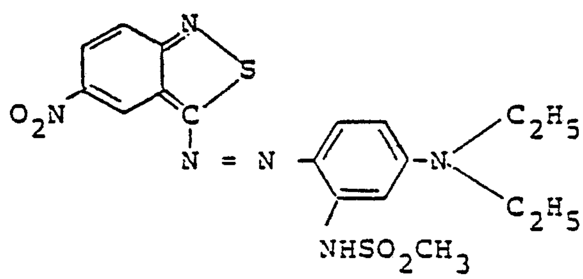

(A)

and

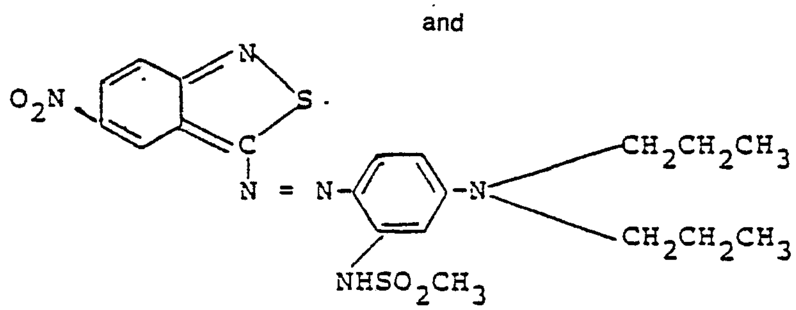

(B)

characterised in that their interplanar spacings d/Å are 13.20, 7.87, 6.05 and 3.41 at the relative intensities 100, 35, 70 and 80.

4. Mixture of azo dyestuffs according to Claim 3, characterised in that the mixing ratio is 40 : 60 to 60 : 40, preferably 50 : 50.

5. Process for dyeing polyester fibres, characterised in that the dyestuff modification according to Claim 3 is used.

## Revendications

1. Colorants azoïques de formule (II)

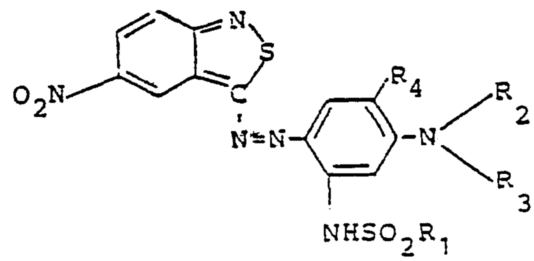

dans laquelle

$R_1$ est un groupe alkyle en $C_1$ à $C_4$ éventuellement substitué par du chlore,

$R_2$ est un groupe alkyle en $C_1$ à $C_4$, alcényle en $C_3$ à $C_5$, (alkyle en $C_1$ à $C_4$)-O-(alkyle en $C_2$ à $C_4$) ou (alkyle en $C_1$ ou $C_2$)-O-(alkyle en $C_2$ à $C_4$)-O-(alkyle en $C_2$ à $C_4$),

$R_3$ est un groupe alkyle en $C_1$ à $C_4$, alcényle en $C_3$ à $C_5$, (alkyle en $C_1$ à $C_2$)-O-(alkyle en $C_2$ à $C_4$) ou (alkyle en $C_1$ à $C_2$)-O-(alkyle en $C_2$ à $C_4$)-O-(alkyle en $C_2$ à $C_4$), et

$R_4$ est un groupe -O-alkyle en $C_1$ à $C_2$ ou un atome d'hydrogène.

2. Procédé de teinture et d'impression de matières organiques, notamment de matières fibreuses, caractérisé en ce qu'on utilise des colorants suivant la revendication 1.

3. Mélange de colorants azoïques de formules

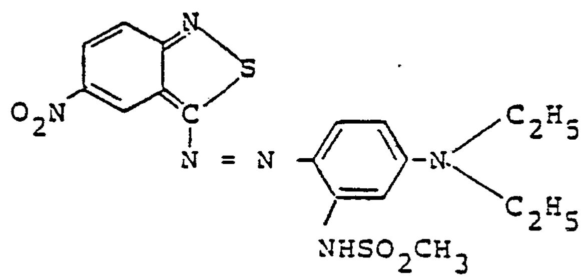

(A)

et

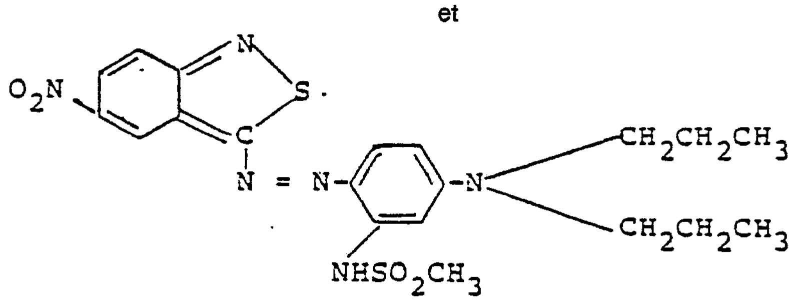

(B)

caractérisé en ce que leurs distances d/Å entre plans réticulaires s'élèvent à 16,20, 7,87, 6,05 et 3,41 avec les intensités relatives 100, 35, 70 et 80.

4. Mélange de colorants azoïques suivant la revendication 3, caractérisé en ce que le rapport de mélange a une valeur de 40 : 60 à 60 : 40, de préférence 50 : 50.

5. Procédé de teinture de fibres en polyester, caractérisé en ce qu'on utilise la forme de colorants suivant la revendication 3.

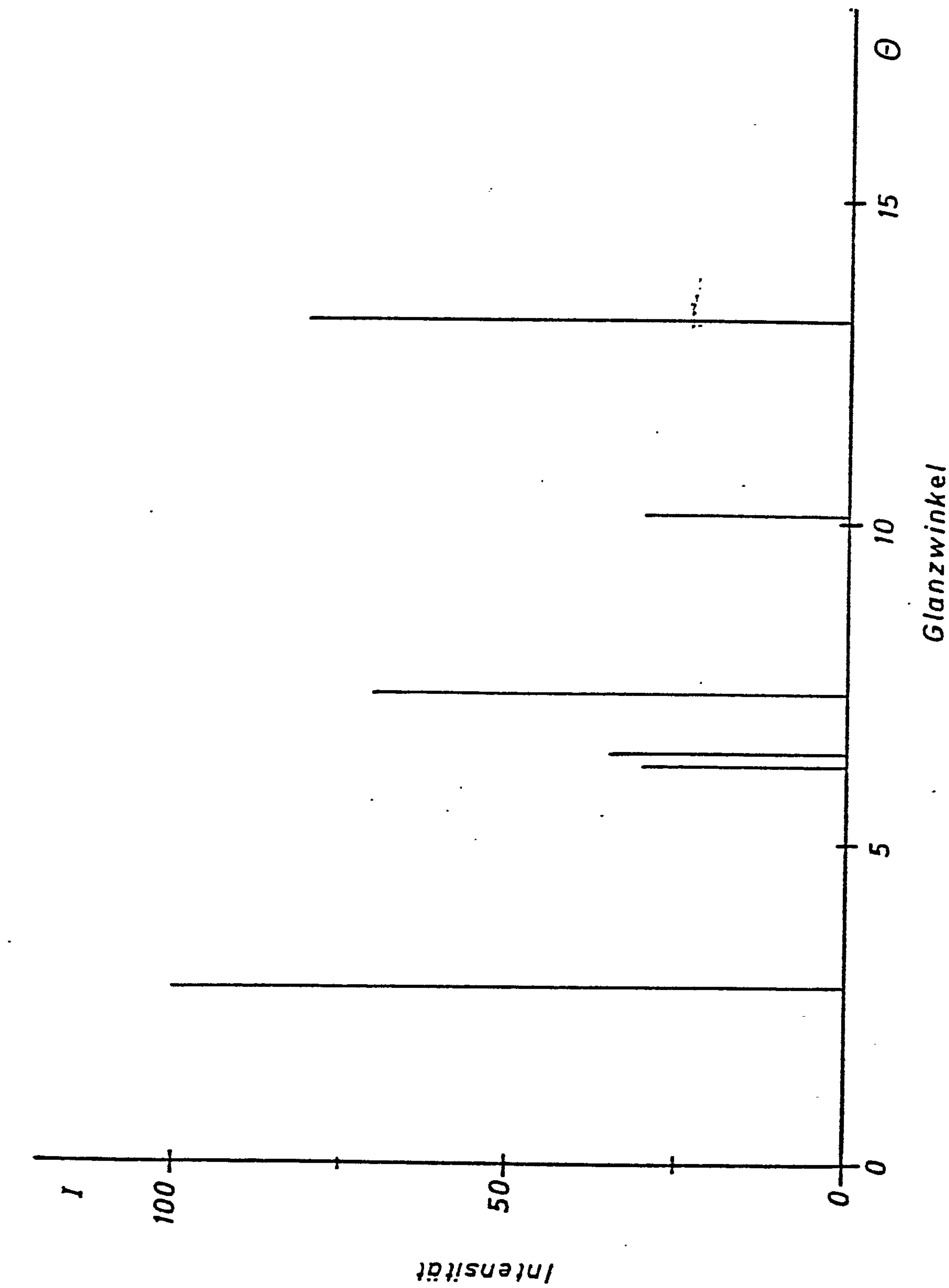


FIG. 1

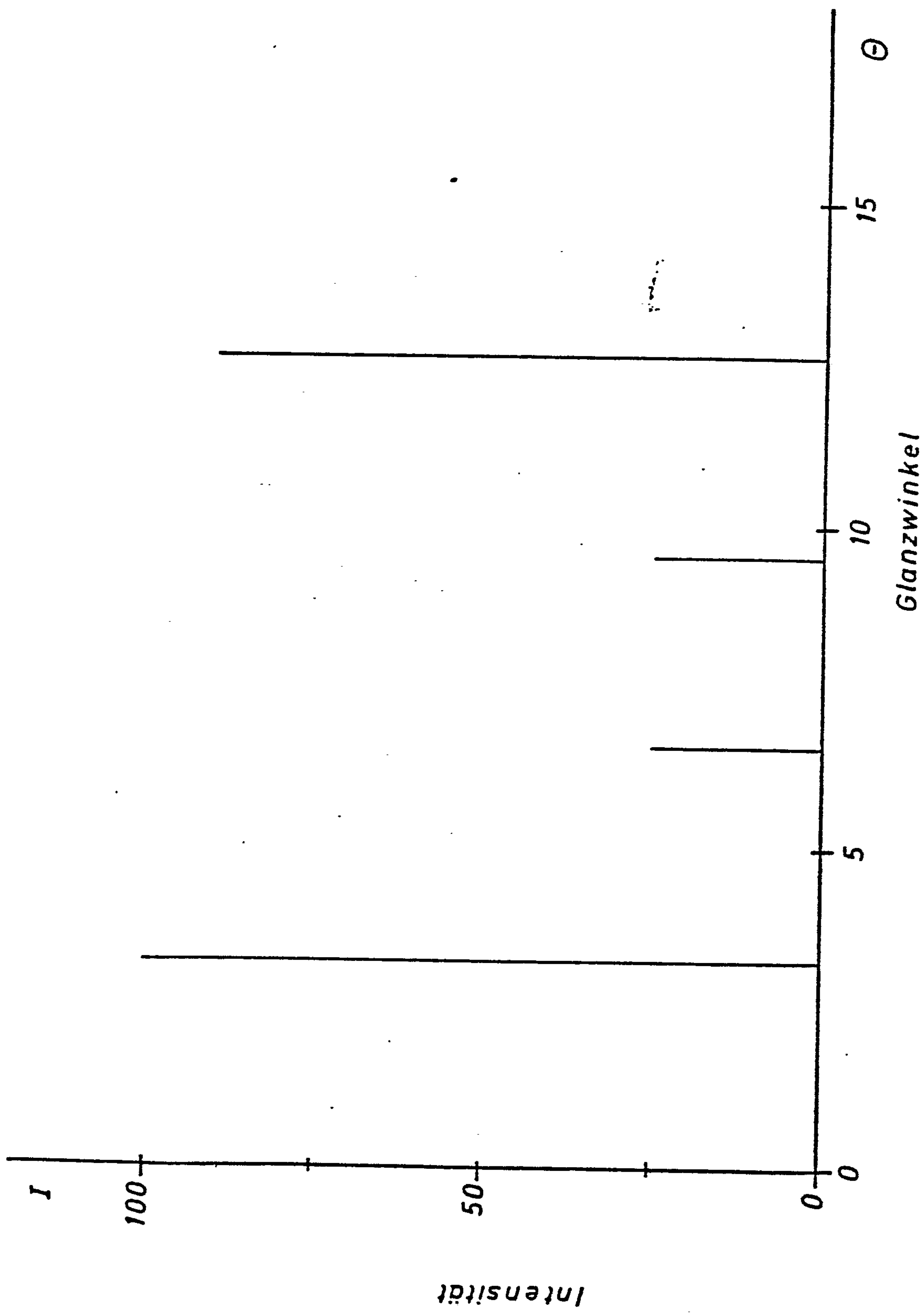


FIG. 2

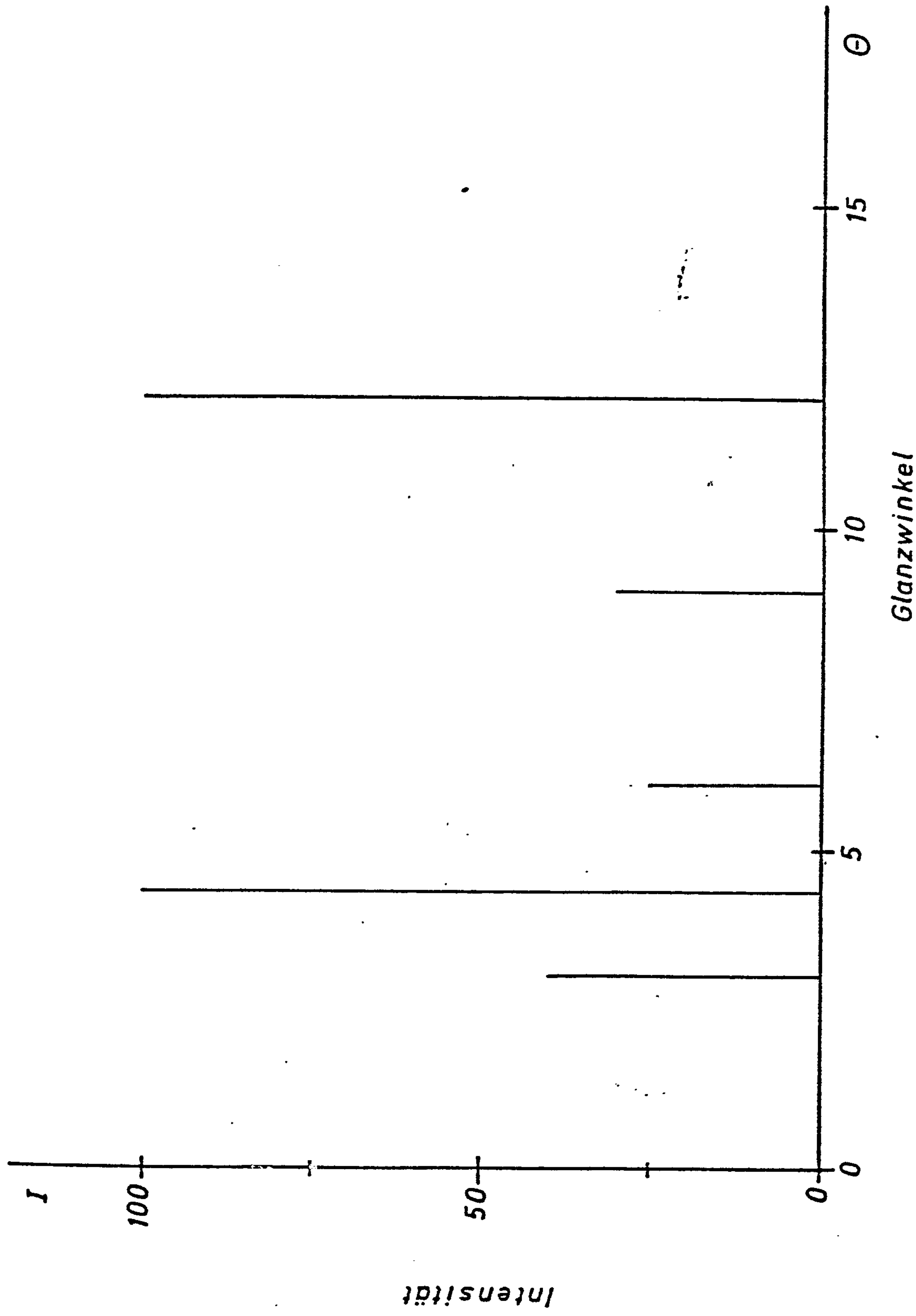


FIG. 3